Europäisches Patentamt

European Patent Office

Office européen des brevets

(11) Publication number: **0 411 620 A2**

# EUROPEAN PATENT APPLICATION

(21) Application number: **90114797.5**

(51) Int. Cl.⁵: **G01N 35/06**

(22) Date of filing: **01.08.90**

(30) Priority: **02.08.89 JP 199420/89**

(43) Date of publication of application:
**06.02.91 Bulletin 91/06**

(84) Designated Contracting States:
**CH DE FR GB IT LI**

(71) Applicant: **HITACHI, LTD.**
**6, Kanda Surugadai 4-chome**
**Chiyoda-ku, Tokyo 100(JP)**

(72) Inventor: **Maekoya, Chiaki**
**3600-312, Nakane**

**Katsuta-shi(JP)**
Inventor: **Omori, Akira**
**3079-9, Godai, Nakamachi**
**Naka-gun, Ibaraki-ken(JP)**
Inventor: **Takata, Yoshinori**
**5-30, Kameokacho**
**Chiba-shi(JP)**

(74) Representative: **Strehl, Schübel-Hopf,**
**Groening**
**Maximilianstrasse 54 Postfach 22 14 55**
**D-8000 München 22(DE)**

(54) **Apparatus and method for chemically analyzing liquid sample.**

(57) In a chemical analyzing apparatus, sample containers (54) reagent containers (54) cleaning port (7), a waste port (6), reaction containers (58), and a measuring cuvette (4) are arranged along one circumference. The sample containers and the reagent containers are placed in a common area (8). An operator inputs from a keyboard (14) information identifying those positions in the common area (8) at which samples and reagents are loaded, for filing the information into a microcomputer (3). The filed information is displayed on a screen (13). The maximum total number of containers capable of being set in the common area (8) is constant. But, the numbers of sample and reagent containers (54) can be changed through the keyboard (14) such that when the number of sample containers is large, the number of containers allocated for the reagents is reduced, or vice versa. A pipetting nozzle (9) is turned along the circumference and can be moved vertically at required positions. Transfer operations for various liquids are all carried out by a single nozzle. The nozzle (9) is operated to impart a sample and a reagent to one reaction container (58). Then, the operation of sucking a mixed solution from the reaction container (58) into the nozzle (9) and returning the sucked solution to the reaction container (58) again is repeated for full mixing. The reaction solution is supplied to the cuvette (4) by the nozzle (9) and subjected to measurement of extinction, fluorescence or scattered light. The reaction solution after the measurement is discarded to the waste port (6) by the nozzle (9). The nozzle is positioned at the cleaning port (7) on demand, whee the nozzle is cleaned by discharging a cleaning liquid through itself.

FIG. 1

EP 0 411 620 A2

# APPARATUS AND METHOD FOR CHEMICALLY ANALYZING LIQUID SAMPLE

## BACKGROUND OF THE INVENTION

The present invention relates to an apparatus and a method for analyzing liquid samples, and more particularly to an analyzing apparatus and an analyzing method suitable for use in developing reaction between a sample and a reagent in a reaction container which is placed at a predetermined position.

A conventional automatic chemical analyzing apparatus of the discrete type is generally designed, as disclosed in U.S. Patent No. 4,451,433 by way of example, such that a row of reaction containers and a row of sample containers are individually driven by associated drive mechanisms independent of each other, and a sample pipetting mechanism, a reagent pipetting mechanism and a stirring mechanism are constituted to perform respective desired motions. As a simple type automatic analyzing apparatus, there is known one disclosed in Japanese Patent Unexamined Publication No. 58-214857 (1983) (corresponding to GB2121169A) by way of example.

In the analyzing apparatus of the above Japanese Patent Unexamined Publication No. 58-214857, a turnable arm has a pipet and a cuvette gripper, while a measuring position into which a cuvette is to be inserted and a plurality of reagent bottles are arranged along a movement path of the pipet. This apparatus of Japanese Patent Unexamined Publication No. 58-214857 is constituted such that sample cups are held by a movable ring, and each sample cup is located to a predetermined sucking position upon rotation of the ring. Further, a row of measuring cuvettes are held by another movable ring, so that the respective cuvettes are moved to a take-out position successively. If a photometer is used as a measuring device in Japanese Patent Unexamined Publication No. 58-214857, the cuvette would be shifted in position with respect to an optical path, because of the arrangement that the cuvette is set to the measuring position by the gripper.

USP No. 4,311,667 is another example of the prior art. In USP No. 4,311,667, a reagent supplying probe attached to a cylinder can be turned to selectively suck a reagent into the probe. Over a turning path of the probe, there are disposed reagent vessels and a washing water vessel in the ring form. On the other hand, reaction vessels are held on a tuntable such that as the turntable rotates intermittently, each reaction vessel can receive the reagent from the probe.

In any prior art, as explained above, a setting place for sample containers and a setting place for reagent containers must be spaced from each other and provided separately for exclusive use. Furthermore, the sample containers and the reaction containers must be transferred independently of each other.

## SUMMARY OF THE INVENTION

An object of the present invention is to provide an analyzing apparatus and an analyzing method which can easily be adaptable to even such situations as where the kind of samples and/or the number of analysis items is varied to a large extent.

Another object of the present invention is to provide an analyzing apparatus and an analyzing method in and with which the operation of analysis from sampling to outputting of a measured result can be automated while remarkably reducing the number of mechanisms for transfer motions.

Still another object of the present invention is to provide an analyzing apparatus and an analyzing method which can implement cleaning (washing) of reaction containers and transfer of a liquid (solution) with a simple structure.

The present invention is featured in comprising a common space along a movement path of a pipetting probe in which space any of sample containers and reagent containers can be set, and an input device which can specify sample setting places and reagent setting places within the common space, so that the information for allocating the sample setting places and the reagent setting places within the common space can be changed dependent on input information from the input device.

A control device is able to operate the pipetting probe in such a manner as to select and suck a sample from the newly allocated sample setting place, and also to select and suck a reagent from the newly allocated sample setting place.

In a preferred embodiment of the present invention, a plurality of sample containers, a plurality of reagent containers, at least one reaction container into which a sample and a reagent are imparted, a liquid inlet for a cuvette installed in a photometer, a liquid inlet of a waste receiving section, and a probe cleaning tank are arranged in the form of a ring as a whole. A pipetting probe is provided to be turnable in an angular range of 360 degrees along a circumference of the ring. Transfer of a liquid from one particular

2

selected place to another place on the circumference is carried out by using only the probe.

In a preferred embodiment of the present invention, a reaction solution resulted from proceeding of the reaction in the reaction container, into which a sample and a reagent are put, is sucked into the pipetting probe, and the probe is then transferred for supplying the reaction solution in the probe to a measurement cell or cuvette of the photometer. The reaction solution remaining in the reaction container is sucked into the probe, and the probe is then positioned to the waste receiving section so that the reaction solution in the probe is drained there. Afterward, the probe is returned to a position above the reaction container, and a cleaning liquid is discharged into that reaction container. Subsequently, the cleaning liquid discharged into the reaction container is sucked into the probe, and the cleaning liquid in the probe is then drained at the waste receiving section.

In an analyzing apparatus embodying the present invention, the sample containers and the reagent containers are set in the common space in appropriate numbers respectively dependent on the number of samples and the number of reagents necessary for analysis. When the kind of sample or the like is changed, the number of sample containers to be set and the number of reagent containers to be set are also changed accordingly. Depending on such a change in the measuring conditins, the information specifying where the sample setting region starts and terminates, as well as where the reagent setting region starts and terminates in the common space is applied from the input device to the control device for updating the preceding position information of samples and reagents. In other words, the number of samples to be set can be increased or decreased in conjunction with the number of reagents to be set necessary for plural analysis items.

A sample from one sample container and a reagent from one reagent container are sucked by the pipetting probe separately and imparted to one reaction container. A reaction solution produced in the reaction container is supplied to the cuvette of the photometer using the same pipetting probe. To simplify the above operation, the sample containers, the reagent containers, the reaction containers, the liquid inlet for the cuvette, the liquid inlet of the waste receiving section, the probe cleaning tank, etc. are arranged along the circumference of the ring, while the pipetting probe is turned along the circumference for transfer of liquids. This permits to constitute a transfer mechanism very simply as a whole, because of no need of driving the sample containers, the reagent containers and the reaction containers.


BRIEF DESCRIPTION OF THE DRAWINGS

Fig. 1 is an appearance view of an analyzing apparatus of one embodiment of the present invention;

Fig. 2 is a view for explaining an arrayed state of containers in a common space of the apparatus of Fig. 1;

Fig. 3 is a view showing an optical system of a multi-wavelength photometer in the apparatus of Fig. 1;

Fig. 4 is a partially broken-away view of a reaction container holder in the apparatus of Fig. 1;

Figs. 5, 6 and 7 are partially sectioned views showing the practical forms in use of respective bottles doubling as holders;

Fig. 8 is a schematic view of a pipetting mechanism in the apparatus of Fig. 1;

Fig. 9 is a block diagram for explaining control and arithmetic functions in the apparatus of Fig.1; and

Fig. 10 is a flowchart showing one example of the analysis operation for a soil extract.


DETAILED DESCRIPTION OF THE PREFERRED EMBODIMENT

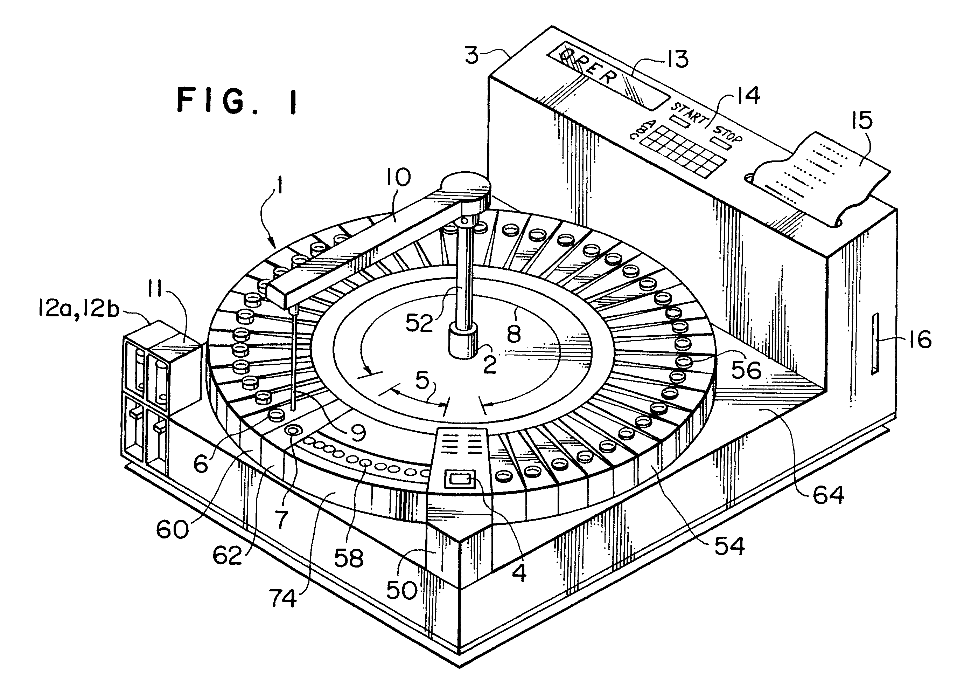

Hereinafter, a preferred embodiment of the present invention will be described with reference to the drawings. Fig. 1 is an appearance view of an analyzing apparatus of one embodiment of the present invention, in which a semi-transparent and colored cover for covering the entire analyzing apparatus is removed away.

In Fig. 1, a multi-item automatic chemical analyzing apparatus 1 capable of analyzing many kinds of analysis items or object components includes various containers arranged in the circumferential direction. A setting place for those containers is designed so as to form a ring having a predetermined width. A bearing 2 of a pipetting mechanism is disposed at the center of the ring, i.e., at the center of the circumference along which the containers are arranged. A rotational shaft 52 is fitted through the bearing 2 in a vertically movable manner. An arm 10 is fixed to the upper end of the rotational shaft 52, and a nozzle 9 as a pipetting probe is vertically downwardly attached to the arm 10 in the vicinity of its distal end. The nozzle 9 is connected through a flow path to a syringe system described later. The pipetting mechanism includes a drive system for vertically moving and rotating the rotational shaft 52, the arm 10 and the nozzle 9, a cylinder system for allowing the nozzle 9 to carry out the pipetting operation and the cleaning liquid discharge operation, etc.

In the multi-item analyzing apparatus of Fig. 1, the whole circumference or ring is divided into several regions. The largest divided range of the circumference is occupied by an arcuate common space 8 where both of reagent containers and sample containers can be arranged. Bottles doubling as holders 54 each having the same configuration are accommodated in container loading sections numbered from No. 1 to No. 38 one to one. With this embodiment, the bottles 54 are accommodated in the common space 8 such that the total sum of the sample containers and the reagent containers amounts to thirty-eight (38). Respective openings 56 of the bottles doubling as holders 54 arrayed in the common space 8 to position adjacent to each other are all arranged along the circumference. The embodiment of Fig. 1 can accommodate the thirty-eight bottles doubling as holders 54 in total. The second largest divided range is occupied by a reaction region 5 where ten (10) reaction containers 58 are set in the embodiment of Fig. 1. Openings of these reaction containers 58 are also all arranged along the circumference. Other containers and the like arranged along the circumference are a liquid inlet for a rectangular cuvette 4 installed in a multi-wavelength photometer 50, a waste port 6 serving as a liquid inlet of a waste receiving section 60, and a cleaning port 7 of a probe cleaning tank 62.

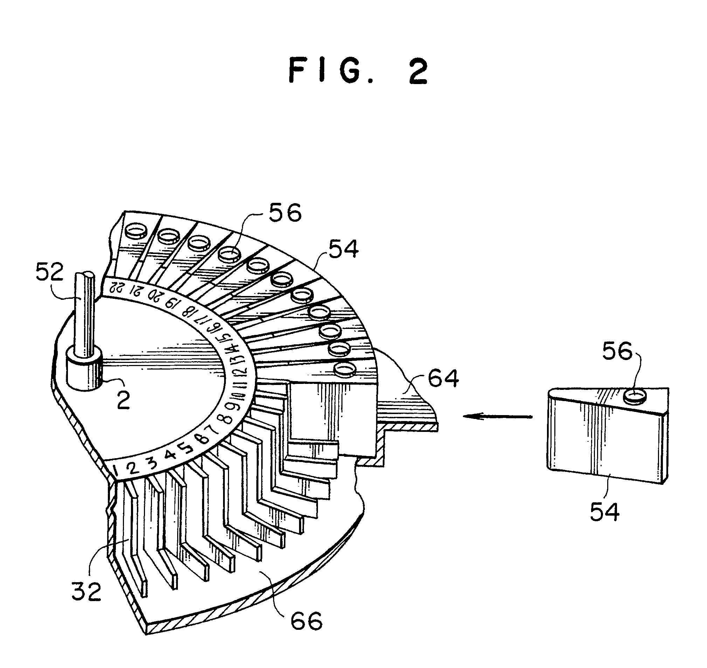

The bottles doubling as holders 54 can freely be set into and removed out of the common space 8. A state of containers arrayed in the common space 8 will now be described with reference to Fig. 2. A bottom wall 66 of the common space 8 is formed into a doughnut shape slightly stepped down from a surface 64 of a base cover. Along the side wall of the ring on the inner peripheral side, a number of partitions 32 are provided with equal angular intervals for partitioning every pairs of adjacent bottles doubling as holders 54 from each other. Each of the partitions 32 has a height almost as high as that of the bottle doubling as holder 54 on the inner peripheral side nearer to the rotational bearing 2, and has a height slightly projecting from the bottom surface 66 of the common space on the outer peripheral side, thereby enabling the individual bottles doubling as holders to be easily set into and removed out of the ring-like container accommodating section.

The bottles doubling as holders 54 arrayed in the common space 8 all have the same configuration and are substantially trigonometric in appearance. A liquid inlet/outlet opening 56 is formed in the upper surface of each bottle 54 at an appropriate location. The opening 56 has its inner diameter selected to such a dimension as suitable to insert or place a cup of small volume cup explained later. In other words, the liquid inlet/outlet opening 56 doubles as an opening for placing the cup of small volume.

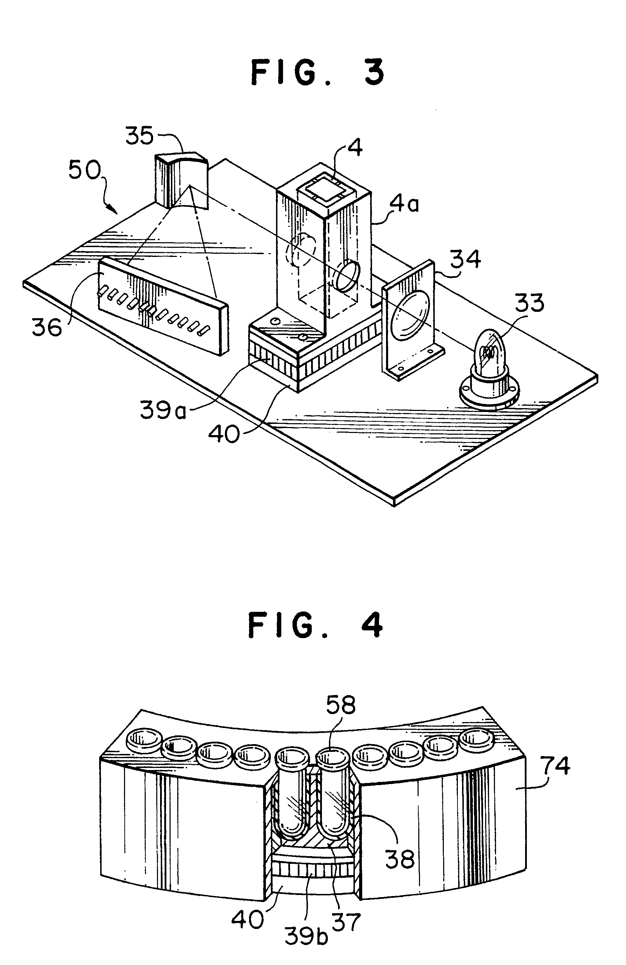

The multi-wavelength photometer 50, the reaction container holder 74, the waste receiving section 60 and the probe cleaning tank 62 in Fig. 1 are all fixedly installed on a base of the analyzing apparatus 1. Among them, an optical system of the multi-wavelength photometer 50 is shown in Fig. 3, and the reaction container holder 74 is shown in Fig. 4 with its part broken-away.

In the multi-wavelength photometer 50 shown in Fig. 3, a light emitted from a light source 33 passes through a lens 34 and then a cuvette 4 as a measurement cell. Afterwared, the light is dispersed by a concave diffraction grating 35 into monochromatic lights of respective wavelengths and then sensed by a photodiode array 36. When a reaction solution is put into the cuvette 4 and the light is passed through the cuvette 4, the light is absorbed by the reaction solution at a particular wavelength. By measuring an amount of reduction in the light intensity at that wavelength by the photodiode array 36, therefore, density of the object component can be determined. In addition, since a holder 4a of the cuvette 4 is contacted with a heat radiating plate 40 through a heat conducting element (Peltier element) 39a, the reaction solution in the cuvette 4 is held at a constant temperature.

The reaction container holder 74 of Fig. 4 has a heat block 37, and the reaction containers 58 are respectively fitted in ten (10) holes formed in the heat block with equal angular intervals. Each reaction container 58 has its outer wall kept in contact with a hole wall of the heat block 37 through a layer 38 of heat conducting grease for thermal conduction. The heat block 37 is in turn contacted with the heat conducting element (Peltier element) 39b and the heat radiating plate 40.

Keeping the cuvette 4 and the reaction containers 58 at a constant temperature makes it possible for the reaction between a sample and a reagent to progress with high reproducibility. For easiness of temperature control, that constant temperature is set higher than the room temperature. But it is preferably held lower than 40° C, because the solution is evaporated in an larger amount as the temperature becomes higher. In the analyzing apparatus of Fig. 1, that temperature is maintained at 37° C.

The pipetting probe or the nozzle 9 in the multi-item analyzing apparatus of Fig. 1 is turned to draw a circumference as the rotational shaft 52 is rotated under positioning control in a condition that the rotational shaft 52 is moved up to some raised level. The path of this turning motion of the nozzle corresponds to the aforesaid circumference along which the various containers and the like are arrayed. The maximum turning angle of the arm 10 and the nozzle 19 is 360 degrees. The above turning motion is controlled by a drive device such that the nozzle 9 selectively proceeds in either clockwise or counterclockwise direction. The nozzle 9 is also positioned by a control device in such a manner as to intermittently stop substantially at the center of the opening of each container or the like arranged along the circumference.

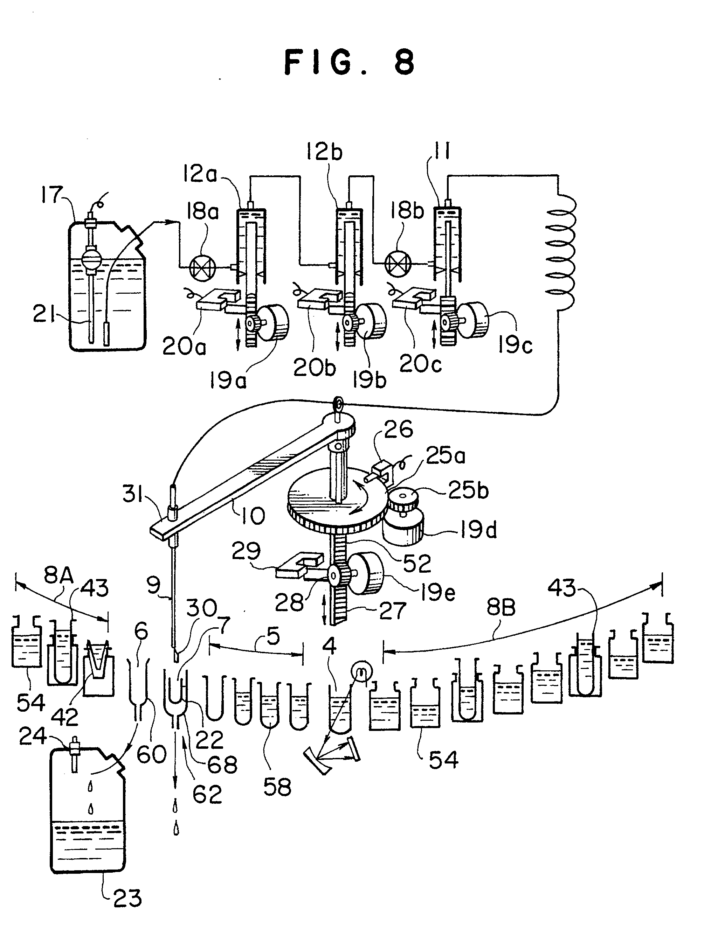

As shown in Fig. 8, the syringe system of the pipetting mechanism comprises a micro-syringe 11 which can suck and discharge a fluid on the order of $\mu \ell$ volume, and a pair of synringes 12a, 12b each of which can suck and discharge a fluid on the order of $m \ell$ volume. This syringe system is able to supply a cleaning liquid to the nozzle 9 for discharging the cleaning liquid to the outside through an opening at the distal end of the nozzle 9.

The multi-item analyzing apparatus of Fig. 1 permits to transfer a liquid from one particular selected place to another place on the circumference by using only the pipetting probe 9. Also, this probe 9 is able to perform the pipetting operation for sucking and sampling a liquid, discharging a liquid, as well as mixing liquids at required places in accordance with the programmed operation sequence.

A control and arithmetic section 3 of the analyzing apparatus 1 incorporates a microcomputer therein, and further includes a non-volatile memory such as a floppy disk, where information of the operation control program has been stored, and a random access memory for storing arithmetic information such as detection signals. On appearance, an operator can see a display screen 13, a keyboard 14, a printer 15, a floppy disk loading port 16, etc. in the control and arithmetic section 3. Because the upper surface of the control and arithmetic section 3 is elevated from the section in which the various containers and the like are arrayed, the control panel of the control and arithmetic section 3 can be protected if it happens that the operator spills out any reagent or the like by mistake.

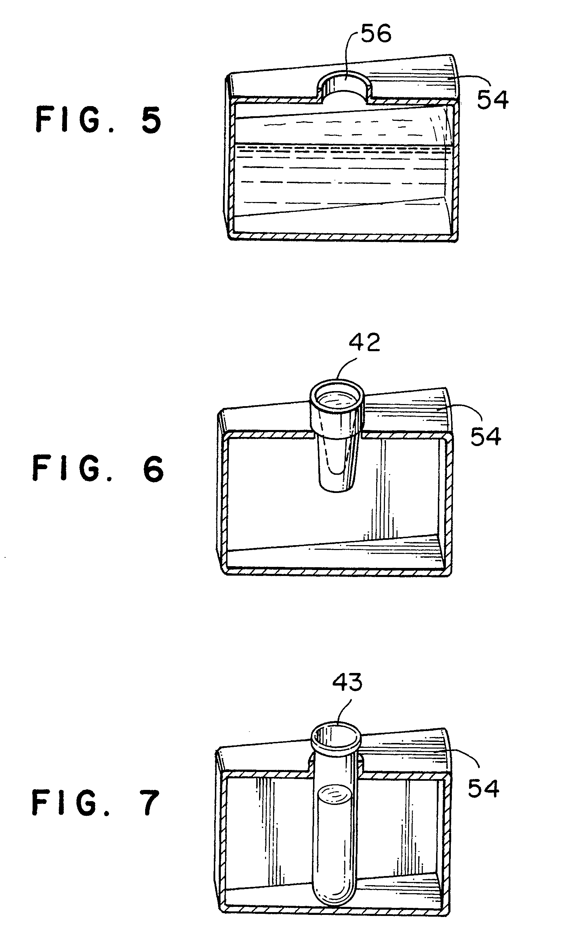

The bottles doubling as holders 54 arrayed in the common space 8 of the analyzing apparatus of Fig. 1 can practically be used in the forms as shown in Figs. 5 - 7. Each bottle doubling as holder 54, which is substantially sectorial in a horizontal section, has the volume enough to receive a liquid of 100 - 300 $m \ell$ and can be used as the sample container or the reagent container even in itself. Thus, when the sample or the reagent can be prepared in a relatively large amount, the liquid is put in the bottle doubling as holder 54 itself as shown in Fig. 5. Alternatively, when the sample or the reagent can be prepared only in an amount as small as 1 - 2 $m \ell$, a small-sized cup 42 including a liquid of the sample or the reagent put therein is placed over the opening 56 of the bottle doubling as holder 54 as shown in Fig. 6. Furthermore, when the sample or the reagent can be prepared in an amount of 2 - 20 $m \ell$, a medium-sized cup 43 of the test tube type including the sample or the reagent put therein is inserted through the opening 56 of the bottle doubling as holder 54 and held inside the bottle as shown in Fig. 7.

Fig. 8 is a view for explaining a pipetting mechanism in the multi-item analyzing apparatus of Fig. 1. The common space 8 in Fig. 1 is schematically shown as divided into a sample allocating region 8A and a reagent allocating region 8B in Fig. 8. Accordingly, samples are put in the bottle doubling as holder 54, the medium-sized cup 43 and the small-sized cup 42 within the sample allocating region 8A. Also, respective reagents are put in the bottles doubling as holders 54 and the medium-sized cups 43 within the reagent allocating region 8B.

Fig. 8 shows a condition that the nozzle 9 attached to the arm 10 is located at a reference position. In other words, when the analyzing apparatus is at rest in the analysis operation, the nozzle 9 is always located at the cleaning port 7 of the probe cleaning tank 62 and in a ready state waiting for an operation command from the analyzing apparatus. The relationship between a positioning disk 25a and a position sensor 26 is constantly held so that the turning motion of the nozzle 9 is positioned with the position of the cleaning port 7 being as a reference.

The probe cleaning tank 62 comprises a bottom-equipped inner tube 22 and a liquid discharging outer tube 68, the inner tube 22 having a small hole formed in the vicinity of its bottom. When cleaning the nozzle 9, the distal end of the nozzle 9 is descended into the bottom-equipped inner tube 22 and a cleaning liquid is discharged from the nozzle 9. At this time, since the flow rate of the discharged cleaning liquid is set larger than the outflow rate through the small hole of the inner tube 22, the cleaning liquid overflows from the top end of the inner tube 22 so as to flow into the outer tube 68. The exterior wall surface of the nozzle 9 is also thereby cleaned in the inner tube 22. When the discharge of the cleaning liquid from the nozzle 9 is stopped, the liquid still continues flowing out through the small hole and hence no cleaning liquid remains in the bottom-equipped inner tube 22.

In the case of normal samples, mixing of a sample and a reagent is achieved with transfer of liquids between the reaction container 58 and the nozzle 9. More specifically, the nozzle 9 is first operated to suck a sample from one sample container and imparts it into one reaction container 58. The nozzle 9 is then operated to suck a reagent from one reagent container and adds it into the same reaction container 58. Afterward, the nozzle 9 is operated to suck a solution of the sample and the reagent (i.e., a mixed solution

EP 0 411 620 A2

not yet fully mixed) from the reaction container 58 and immediately discharges the sucked solution into the same reaction container, followed by repeating the above sucking and discharging operations several times. As a result, the fully mixed solution is finally prepared in the reaction container 58. The mixed solution is then incubated for a predetermined period of time in the reaction container 58 kept at 37°C, during which the reaction between the sample and the reagent proceeds to produce a reaction solution. This reaction solution is sucked and held by the nozzle 9, and transferred to the liquid inlet of the cuvette 4 by turning the nozzle 9. At this position, the reaction solution is discharged to be supplied into the cuvette 4.

When it is required to dilute a sample, the control device commands to use a first reaction container and a second reaction container. First, a predetermined amount of the sample sucked by the nozzle 9 from one sample container is discharged into the first reaction container. Depending on a degree of dilution, a predetermined amount of a diluent (pure water in normal cases) is discharged into the same first reaction container from the nozzle 9. Then, the sample and the diluent are mixed through repeated transfer of the solution between the nozzle 9 and the first reaction container, thereby producing the diluted sample, which is diluted to a desired degree of dilution, in the first reaction container. Afterwared, the nozzle 9 is operated to suck a part of the diluted sample in the first reaction container and imparts it into the second reaction container. After cleaning the nozzle 9, it is operated to suck a reagent from a group of reagent containers selectively dependent on the object component to be measured, and discharges the sucked reagent into the second reaction container. Subsequently, the nozzle 9 is operated to repeat the sucking and discharging operation to fully mix a mixed solution in the second reaction container, followed by waiting for the reaction to proceed. At the time when a desired reaction solution is produced, the nozzle 9 is operated to sample the reaction solution from the second reaction container and supply it to the measurement cell or cuvette 4.

When it is desired to analyze the same analysis item for a plurality of samples, the sampling operations of all the samples is first carried out. More specifically, the individual samples are imparted by the nozzle 9 into a plurality of reaction containers successively. Between every two successive sampling operations to suck the respective samples, the nozzle 9 is always cleaned. After all the samples are put into the respective reaction containers, the nozzle 9 repeats the sampling operation of a reagent corresponding to the desired analysis item, thereby adding the same reagent into all the reaction containers. Since the nozzle 9 requires no cleaning during the above sampling operations of the reagent, the time required for analysis is shortened correspondingly. The subsequent operation of mixing and supplying a reaction solution to the cuvette is carried out in a like manner to the foregoing case successively for all reaction solution in the respective reaction containers.

Next, the pipetting operation of the nozzle 9 will be described in detail with reference to Fig. 8. A water supply tank 17 stores pure water used as a cleaning liquid and a diluent. When discharging the cleaning liquid from the nozzle 9, the pipetting mechanism operates as follows. First, a solenoid valve 18a is opened, a solenoid valve 18b is closed, and both pistons of syringes 12a, 12b are pulled down by rotating pulse motors 19a, 19b, respectively, whereupon the cleaning water (doubling as the diluting water) flows into the syringes 12a and 12b. Then, the solenoid valve 18a is closed, the solenoid valve 18b is opened, and the pulse motors 19a, 19b are rotated in the opposite direction to the above sucking step to push up both the pistons, whereupon the cleaning water (doubling as the diluting water) is discharged from the opening of the nozzle 9 at its distal end.

Other various liquids or solutions are discharged from the nozzle 9 as follows. After closing the solenoid valve 18b and slightly pulling down the piston of the micro-syringe 11 by the pulse motor 19c to introduce a small amount of air, the nozzle 9 is descended to enter the liquid in one sample container of interest, and the piston of the micro-syringe 11 is further pulled down to suck the liquid of interest into the nozzle 9. Then, the nozzle 9 is moved to a position above another container of interest, and the piston of the micro-syringe 11 is pushed up a certain distance by the pulse motor 19c, whereupon a desired amount of the liquid flows out from the nozzle 9 into the latter container. When sampling the liquid in a larger amount, the mℓ syringes 12a, 12b and the micro-syringe 11 are all operated after closing the solenoid valve 18a and opening the solenoid valve 18b.

The amount of the liquid sucked and discharged is adjusted by detecting upper limits of the pistons of the respective syringes by syringe upper limit sensors 20a, 20b, 20C, and optionally setting movement distances from the sensed upepr limits. Note that the reason why a small amount of air is sucked into the nozzle 9 in advance is to avoid mixing between the cleaning water and the sample or reagent. In addition, when the cleaning water (doubling as the diluting water) falls below a certain level, a supplied water level sensor 21 is actuated to deliver an alarm.

Supply of the sample and the reagent, reaction between the sample and the reagent, dilution of the sample, measurement of absorbance, cleaning of the nozzle and respective containers, draining of the spent reaction solution, etc. are carried out for the various containers and ports arranged within a range

6

where the pipetting probe 9 is movable. When measuring the absorbance, the sample and the reagent are first reacted with each other in the reaction container 58 for a certain period of time. Then, the resultant reaction solution is sucked by the nozzle 9 and transferred up to the cuvette 4. Afterward, a light is irradiated to the cuvette 4 for measuring the absorbance. The nozzle 9 is cleaned by putting the nozzle 9 into the inner tube 22 of the cleaning port 7 and actuating the mℓ syringes 12a, 12b to cverflow the cleaning water. The reaction containers 58 and the curvette 4 are cleaned by pouring the cleaning water into them from the nozzle 9 and discharging the poured cleaning water, followed by repeating such pouring and discharging operations. In the case where the cleaning ends incompletely, a detergent liquid is put in one reagent container, and this detergent liquid is sucked and discharged to the reaction containers and the cuvette. The spent reaction solution is tranferred by the nozzle 9 from any of the reaction containers 58 or the cuvette 4 to the waste port 6 and then discharged for in order to be drained. The waste port 6 is communicated to a waste tank 23. When the waste in the tank 23 exceeds a certain level, an alarm is delivered in response to a signal from a waste level sensor 24.

Pulse motors 19d, 19e in the pipetting mechanism function to rotate the arm 10, a stop the arm 10 at any desired position, and move the arm 10 vertically. More specifically, the nozzle 9 is turned to any desired position along the circumference and stopped there by the pulse motor 19d which rotates the toothed positioning disk 25a through a gear 25b. The stopped position is determined by resetting the origin of turning motion of the arm 10 with the aid of the position sensor 26 in the pipetting mechanism, and setting a distance from the origin based on a turned angle of the disk 25a. Vertical motion of the rotational shaft 52 and the arm 10 is effected through a pinion 28 which is rotated by the pulse motor 19e for moving a rack 27 vertically. On this occasion, an upper limit of the vertical position of the arm 10 is detected by an upper limit sensor 29 of the pipetting mechanism. Furthermore, a liquid level sensor 30 associated with the nozzle 9 detects a liquid (or solution) surface in the container and permits setting to stop the distal end of the nozzle at a constant dipped level from the liquid surface. In this embodiment, as the liquid surface lowers upon suction of the liquid into the nozzle, the arm 10 is descended. Conversely, as the liquid surface rises, the arm 10 is ascended. This enables to keep the nozzle end from entering the liquid deeper than necessary, and hence prevent contamination of the outer wall surface of the nozzle. When no liquid is present in the container, the nozzle 9 strikes against the bottom of the container. This contact of the nozzle 9 against the bottom of the container is detected, whereupon a further descent of the arm 10 is stopped.

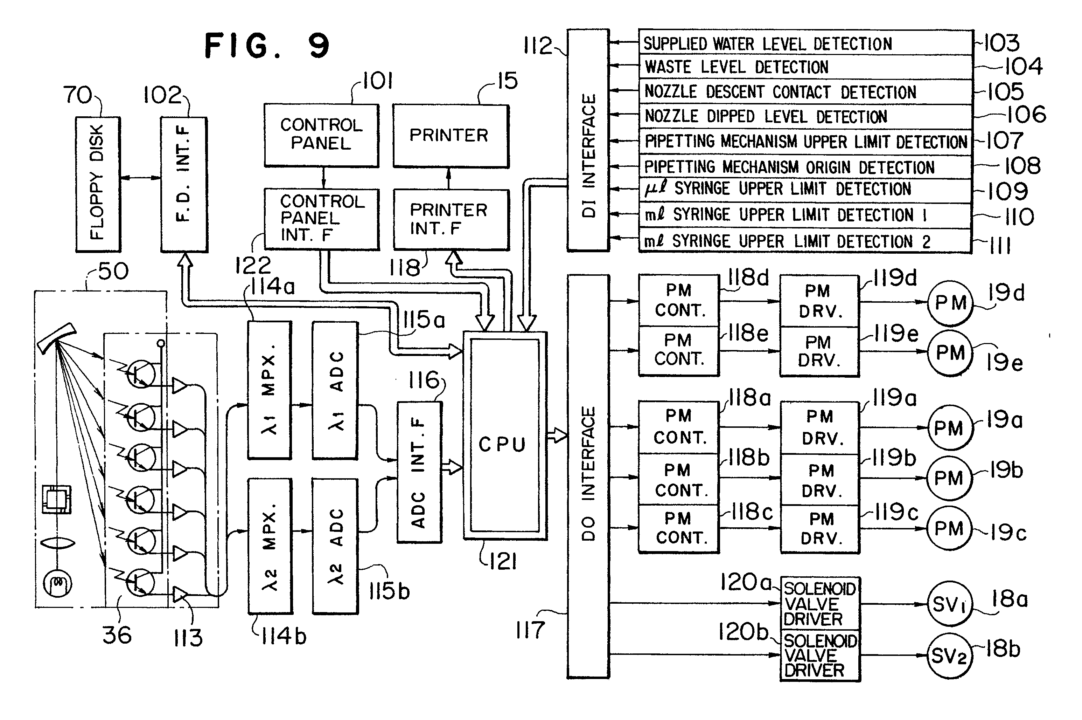

Next, the control and arithmetic functions in the analyzing apparatus of Fig. 1 will be described with reference to Figs. 1 and 9.

Measuring conditions are input to a central control processing unit (CPU) 121 from the keyboard 14 on a control panel 101 through a control panel interface 122. Meanwhile, measuring conditions stored in a floppy disk 70 in advance are also input to the CPU 121 through a floppy disk interface 102.

Various signals indicative of supplied water level detection 103, waste level detection 104, nozzle descent stop detection 105, nozzle dipped level detection 106, pipetting mechanism upper limit detection 107, pipetting mechanism origin detection 108, micro-syringe upper limit detection 109, upper limit detection 110 of the mℓ syringe 12a, and upper limit detection 111 of the mℓ syringe 12b are input from the respective sensors are further input to the CPU 121 through a data input interface (referred to as a DI interface) 112.

When measuring the absorbance to quantity the object component, signals from the photodiode array (or photo array) 36 corresponding to dispersed wavelengths are amplified by respective Log-conversion amplifiers (referred to as Log-conversion AMP) 113, and optional two elements in the photo array 36 (i.e., two different wavelengths) are selected by multiplexers 114a, 114b ($\lambda_1$MPX, $\lambda_2$MPX) (in accordance with commands preset). The selected two signals are then input to the CPU 121 through respective analog/digital converters 115a, 115b ($\lambda_1$ADC, $\lambda_2$ADC) and an analog/digital conversion interface 116. usually, the difference in absorbance between two wavelengths is automatically input to the CPU 121. Note that conversion of the signal intensity to an analysis value is carried out by analyzing a sample of known density for each of the object components in advance, and then comparing the measured value with the known value.

The analysis value is calculated based on the measureing conditions input in advance and an output from the multi-wavelength photometer 50. The calculated result is output to the printer 15 through a printer interface (referred to as a printer INT·F) 118.

While the measuring conditions are also printed by the printer 15 through the printer interface 118, the data being input is displayed on the display 13 through the control panel interface 122.

The measuring conditions set prior to the measurement are preserved into the floppy disk 16 through the floppy disk interface 102.

Operation of the analyzing apparatus is controlled through a data output interface (referred to as a DO interface) 117 based on the measuring conditions and the signals from the respective sensors. For example, selection of the stop position of the arm in the pipetting mechanism, as well as start/stop and timing control of vertical motion thereof are made by the pulse motors (PM) 19d, 19e for rotating and vertically moving the arm 10, which motors are driven by pulse motor controllers (PM CONT) 118d, 118e and pulse motor drivers (PM DRV) 119d, 119e, respectively. Further, the amount of respective liquids (or solutions) and air sucked by and discharged from the nozzle, the amount of the cleaning liquid (doubling as the diluent), as well as timing of the sucking and discharging operations are controlled by the micro-syringe and the two $m\ell$ syringes. These three syringes are operated by rotating the pulse motors (PM) 19a, 19b, 19c through pulse motor controllers (PM CONT) 118a, 118b, 118c and pulse motor drivers (PM DRV) 119a, 119b, 119c, respectively. The solenoid valves ($SV_1$, $SV_2$) 18a, 18b are opened and closed through solenoid valve drivers 120a, 120b, respectively.

Next, the process of advancing the chemical analyzing operation for a liquid sample by the use of the multi-item analyzing apparatus of Fig. 1 will be described below.

After the analyzing apparatus 1 is powered on, an operator sets sample containers and reagent containers in the common space 8 prior to actuating the analyzing apparatus 1 to start the operation of analysis. In usual cases, the number of samples to be analyzed is in plural, and the plural kinds of analysis items are measured for each of the samples. The number of reagents used for each of the analysis items may be one in some cases or two or more in other cases. The sample containers are arrayed successively from the side near the probe cleaning tank 62, and the reagent containers are arrayed successively from the side near the multi-wavelength photometer 50. Although this is convenient for allocating the container setting positions, the method of arraying the containers is not particularly limited to the above one. In each of a group of the sample containers and a group of reagent containers, however, the containers are arrayed in succession.

The container loading or setting positions numbered from No. 1 - No. 38 are stored in advance in a memory such as a floppy disk so that when the probe drive mechanism is given with a command signal to suck the liquid at a particular place, the nozzle 9 is allowed to properly reach the container of interest. When the information instructing to put the sample container or the reagent container at a particular container loading position is applied from the input device, this position No. is made correspond to the sample or the reagent.

Since the total number of the sample containers and the reagent containers capable of being set in the common space is fixed in the analyzing apparatus of Fig. 1, the number of sample containers loaded is increased and the number of reagent containers loaded is decreased when the number of samples to be analyzed is large. In this case, the sample containers may be loaded in number as many as required for two or three kinds of analysis items by way of example. Conversely, when the number of samples to be analyzed is small, it is possible to load reagents necessary for measuring many kinds of analysis items. In this case, a great part of the common space 8 is occupied by the reagent containers, while the number of sample containers loaded is reduced.

Before the analyzing apparatus 1 is started to analyze the first kind of sample, the operator enters the analyzing conditions associated with the analysis items of interest to the microcomputer through the keyboard 14 as the input device, for in order to be stored in the storage unit such as the floppy disk 70. In the case where the kind of sample is a soil extract, for example, various conditions corresponding to the respective analysis items shown in the following table 1 are entered. Although this example of the soil extract requires to analyze such items as $K^+$, $Mg^{2+}$, $Ca^{2+}$, $NH_4^+$, $NO_3^-$, $PO_4^{3-}$, $SiO_3^{2-}$, $BO_3^{3-}$, and PH, the Table 1 illustrates the analyzing conditions for six items among them. The analyzing conditions filed (registered) into the storage unit include an amount of sample sucked, amounts of first and second reagents sucked, reaction (incubation) time, measuring wavelengths ($\lambda_1$, $\lambda_2$), density of reference samples, etc. associated with each of the analysis items. In the case of analyzing those samples immediately, loading positions of the first and second reagent containers, as well as loading position of the reference sample containers are also entered.

In an attempt to analyze another sample by the analyzing apparatus 1, the required analysis conditioners are also entered and filed in advance corresponding to respective analysis items. When the kind of sample is a sample dissolving a steel, such items as silicon, manganese, phosphorus, copper, nickel, chromium and molybdenum are filed. When the kind of sample is water for boilers, such items as $Fe^{2+}$ and $SiO_3^{2-}$ are filed. In addition to the above samples, the present analyzing apparatus can analyze exhaust water from factors, river water, plating solutions, living body fluids, pharmaceuticals and so forth.

Table 1    Filing Example of Analyzing Conditions for Soil Extract

| Analysis Items | Sample ($\mu \ell$) | Reagent 1 | | Incubation Time (min) | Reagent 2 | | Incubation Time (min) | Measuring Wavelength | |
|---|---|---|---|---|---|---|---|---|---|
| | | Bot. Posi. | ($\mu \ell$) | | Bot. Posi. | ($\mu \ell$) | | $\lambda_1$ | $\lambda_2$ |
| K | 20 | 23 | 20 | 5 | 24 | | 5 | 600 | – |
| Mg | 5 | 25 | 500 | 10 | – | – | – | 660 | 700 |
| Ca | 3 | 26 | 500 | 5 | 27 | 500 | 5 | 660 | 600 |
| $NO_3^- -N$ | 20 | 28 | 500 | 5 | 29 | 500 | 5 | 546 | 700 |
| P | 80 | 30 | 150 | 5 | 31 | 150 | 5 | 700 | 600 |
| Si | 20 | 32 | 150 | 5 | 33 | 150 | 5 | 660 | 700 |

– to be cont'd –

EP 0 411 620 A2

**Table 1 (cont'd)**

Reference Samples

| Bot. No. | Density | Bot. No. | Density |
|---|---|---|---|
| 1 | 10 | 2 | 100 |
| 3 | 50 | 4 | 200 |
| 5 | 100 | 6 | 500 |
| 7 | 10 | 8 | 100 |
| 9 | 10 | 10 | 100 |
| 11 | 10 | 12 | 100 |

If the kind of sample to be analyzed and the analyzing conditions are filed in advance, it is only required for the operator to input and sepcify the analysis items from the control panel, whereby the corresponding analyzing conditions can be incorporated into the operating program.

After setting the sample containers and the reagent containers in the common space 8 of the analyzing apparatus, the operator inputs and files the positions in the common space 8 at which the sample containers and the reagent containers have been loaded, from the keyboard 14 on the control panel 101. This input information is displayed on the screen 13 successively. When any of the sample containers and the reagent containers in the common space 8 is replaced with another one, the operator input new information, whereby the name of new sample or agent and the loading position are made correspondent to each other and this renewed relationship is stored.

In an attempt to analyze the same analysis item as those in the Table 1, for example, since eleven (11) sorts of reagents are necessary for analyzing six (6) analysis items, the corresponding reagent containers are set at the positions No. 23 - 33 in the common space 8 one to one, and the information identifying which reagents have been set at which positions is filed. If the number of soil extract samples is ten (10), for example, the corresponding sample containers are set at the positions No. 13 - 22 in the common space 8, and this information is input and filed from the keyboard 14. When measuring reference samples corresponding to the analysis items to plot respective calibration curves, other containers containing those reference samples are further set in the common space 8. Because twelve (12) reference sample containers are required to analyze the above six (6) analysis items, these containers are set at the positions No. 1 - 12 in the common space 8, followed by inputting and filing their sorts and loading positions. In this way, the positions in the common space 8 at which the bottles doubling as holders 54 are to be loaded are allocated to samples or regents as required. The analyzing apparatus then proceeds the analyzing operation in accordance with the position information and the analysis item information.

The following Table 2 shows items to be analyzed for each of ten (10) soil extract samples. In the illustrated input conditions, the fourth sample is measured for seven (7) items, while the remaining samples are all measured for six (6) items.

Table 2

| Input Example of Analysis Items (Soil Extract) | | | | | | | | |
|---|---|---|---|---|---|---|---|---|
| Sample No. | Bot. Posi. No. | Analysis Items | | | | | | |
| | | K | Mg | Ca | No$_3$-N | P | Si | B |
| 1 | 13 | O | O | O | O | O | - | O |
| 2 | 14 | O | O | O | O | O | - | O |
| 3 | 15 | O | O | O | O | O | - | O |
| 4 | 16 | O | O | O | O | O | O | O |
| 5 | 17 | O | O | O | O | O | - | O |
| 6 | 18 | O | O | O | O | O | - | O |
| 7 | 19 | O | O | O | O | O | - | O |
| 8 | 20 | O | O | O | O | O | - | O |
| 9 | 21 | O | O | O | O | O | - | O |
| 10 | 22 | O | O | O | O | O | - | O |

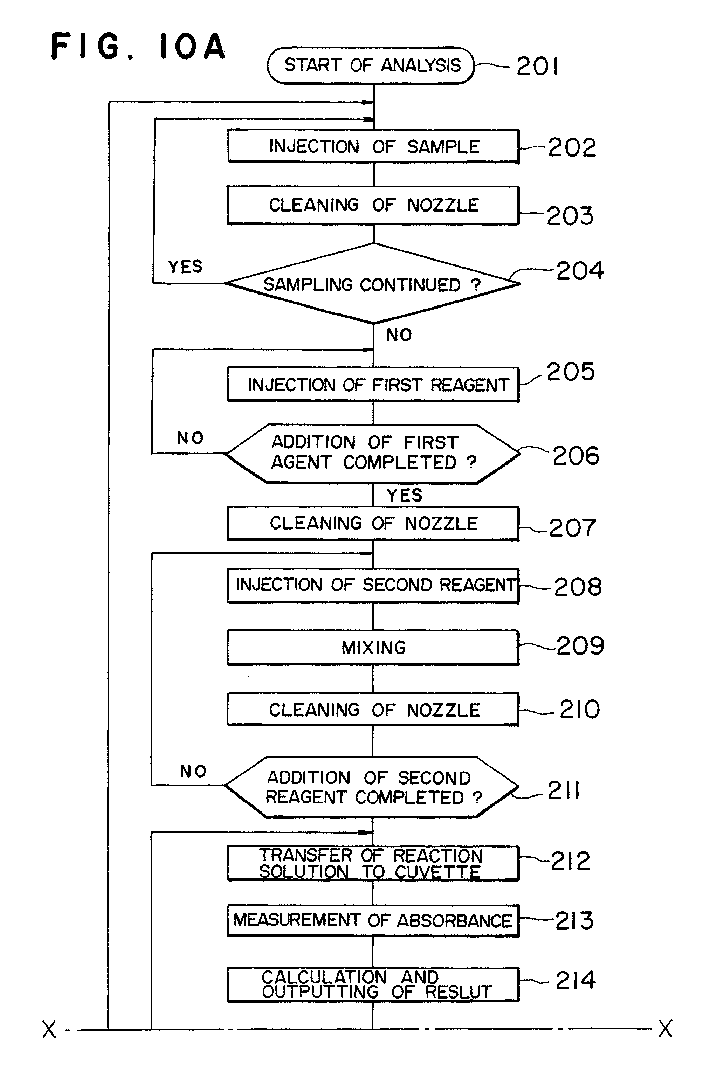

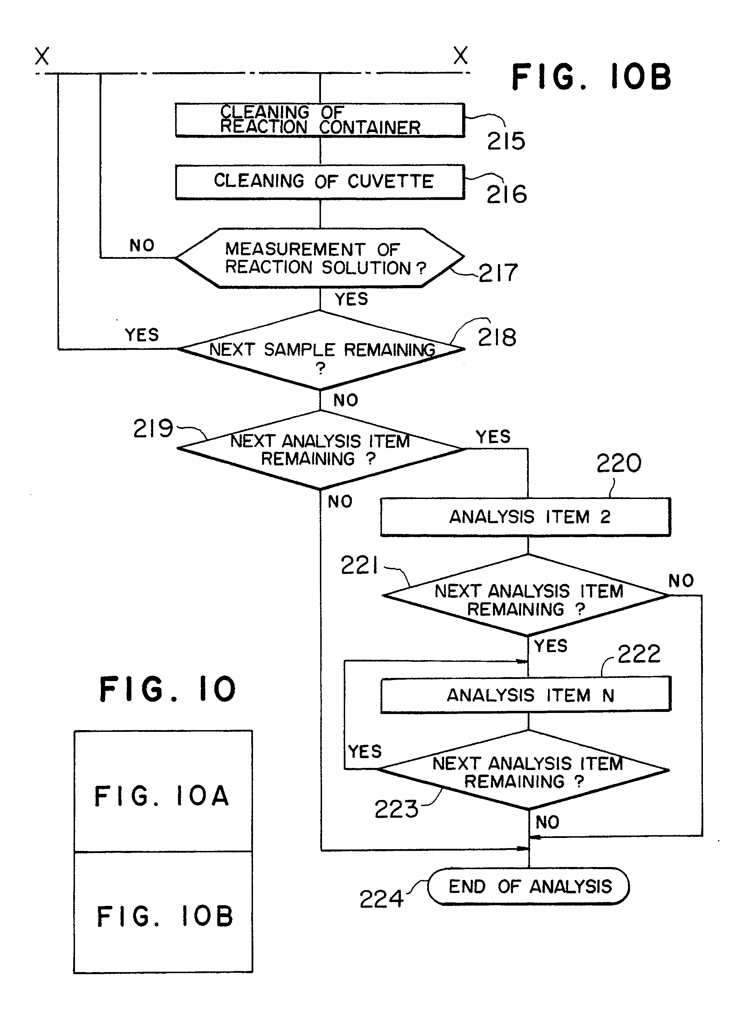

Upon the foregoing procedures being completed for readiness of operation, the operator depresses an analysis start button, causing the analyzing apparatus 1 to carry out the analyzing operation shown in Fig. 10.

In the case of measuring the same plural analysis items for each of samples like soil extracts, the analyzing apparatus is operated to measure the first item for all the samples put in places, and then measure the second item for them. As one example, a flowchart of Fig. 10 is programmed to measure phosphorus (phosphoric acid) as the first item and magnesium as the second item, followed by proceeding to analyze the third through seventh items successively. It is also supposed that the ten (10) sample containers are placed in the common space 8.

In Fig. 10, when the analysis start key is depressed by the operator in a step 201, the control flow proceeds to a step 202. In this step, the nozzle 9 is turned from the cleaning port 7 as a reference position in the initial condition, and once stopped above the first sample container locating in the position No. 13. Then, the nozzle 9 is descended into the first sample container so that 80 $\mu\ell$ of the first sample is sucked into the nozzle 9 with the nozzle end dipped slightly below the sample surface level. Subsequently, the nozzle 9 is ascended and turned until the reaction container holder 74, following which it is once stopped above the first reaction container 58. After descending the nozzle 9, the sample held by the nozzle is discharged and injected into the first reaction container.

In a next step 203, the nozzle 9 is washed for cleaning. More specifically, after discharging the first sample, the nozzle 9 is ascended and turned to position at the cleaning port 7, where the nozzle 9 is descended again such that its distal end enters the inner tube 22. Under this condition, both the m$\ell$ syringes 12a, 12b are operated to discharge the cleaning liquid into the inner tube 22 from the nozzle 9, whereby the inner and outer wall surfaces of the nozzle 9 are cleaned.

In a step 203, it is judged whether or not to continue the sampling operation. With this loop, the above step 202 and step 203 are repeated for each of the second through tenth samples. When the samples have been injected into all the reaction containers in the reaction container holder 74, or when all the samples to be analyzed have been sampled, the control flow now proceeds to step 205.

In the step 205, the nozzle 9 is turned up to a position at which the reagent container containing the first reagent (sulfic p-methylaminophenol solution) for anlysis of phosphorus, followed by sucking 150 $\mu\ell$ of the first reagent. Then, the nozzle 9 is turned to the first reaction container 58 and discharges (injects) the first reagent into the first reaction container. In a step 206, it is judged as to whether or not the first reagent has been added to all the reaction containers containing the samples. The reagent adding operation of the step 205 will be continued until the first reagent is added to all the samples. After the adding operation of the first reagent to all the samples is completed, the control flow proceeds to a step 207 where the nozzle 9 is washed in the cleaning port 7.

In a step 208, the second reagent (ammonium molybdate solution) for analysis of phosphorus is added (injected) to start the color developing reaction.

This step 208 is started five (5) minutes after adding the first reagent. The nozzle 9 is turned up to the position of the reagent container which contains the second reagent, where 150 $\mu\ell$ of the second reagent is sucked into the nozzle 9. Then, the nozzle 9 transfers the second reagent until the first reaction container 58 and discharges it thereinto. Subsequently, the control flow proceeds to a step 209 where the sample and the reagents are mixed with each other through transfer of the solution between the first reaction container 58 and the nozzle 9. This pipetting operation by the nozzle for full mixing is repeated three times.

After the mixing operation, the nozzle 9 is turned to position at the cleaning port 7 in a next step 210, where the inner and outer wall surfaces of the nozzle 9 are cleaned. In a step 211, it is judged as to whether or not the second reagent has been added to all the samples. If the above steps 208 - 210 have been completed for the remaining second through tenth reaction containers, the control flow proceeds to a step 212.

The step 212 is started five (5) minutes after adding the second reagent. More specifically, the reaction solution produced in the first reaction container 58 is sucked by the nozzle 9. Then, the nozzle 9 is turned and once stopped at the inlet of the cuvette 4 of the multi-wavelength photometer 50, following which the color developed reaction solution is discharged and supplied to the cuvette 4. Absorbance of the reaction solution put into the cuvette 4 is measured by the optical system as shown in Fig. 3 (step 213). Since measurement of fluorescence or scattered light may be preferable dependent on the kind of sample, it is also possible to provide a fluorescent photometer or a scattered-light photometer in place of the absorbance photometer as shown in Fig. 3.

Based on the two-wavelength photometry at the wavelengths of 700 nm and 600 nm in the step 213, the detection signals are compared with the calibration curve to calculate the density of phosphorus, following which the analyzed result is stored in the storage unit and output to the printer 15, in a step 214.

The reaction solution remaining in the reaction container 58 after supplying the reaction solution to the cuvette 4 is now sucked into the nozzle 9 and transferred until the waste port 6 for draining. In a step 215, a predetermined amount of the cleaning liquid is discharged from the nozzle 9 into the emptied reaction container for cleaning the inner wall surface of that reaction container. Thereafter, the cleaning liquid in the reaction container is sucked into the nozzle 9 and transferred until the waste port 6 for draining from the nozzle 9. The above oeprations of discharging the cleaning liquid into the reaction container as well as transferring and draining the discharged liquid are repeated three or more times.

After cleaning of the reaction container, the control flow proceeds to a step 216 where the cuvette 4 is cleaned. To this end, the nozzle 9 is inserted into the cuvette 4 to suck therein the reaction solution left after measurement. The nozzle 9 is then transferred until the waste port 6 for draining the sucked reaction solution. Afterward, the cleaning liquid is injected from the nozzle 9 into the cuvette 4 and the injected cleaning liquid is sucked into the nozzle 9, following which it is transferred until the waste port 6 for draining. This series of operations of injecting, transferring and draining the cleaning liquid are repeated several times for cleaning the cuvette 4.

In a step 217, it is judged as to whether or not all the reaction solutions have been measured completely. The above steps 212 - 216 are successively carried out for the remaining respective reaction solutions put in the second through tenth reaction containers. If processing of all the reaction solutions is completed, the control flows proceeds to a step 218. In the step 218, it is judged as to whether or not any sample(s) to be measured for the same analysis item, i.e., phosphorus in this example, still reamins in the common space 8. If the number of sample containers having been set is larger than the number of reaction containers 58 in the reaction container holder 74, the steps 202 -217 are executed again. In the example so far explained, since the measurement of ten (10) samples have all been completely, the control flow of the analyzing apparatus proceeds to a step 219 to start the operation of measuring magnesium as the second analysis item.

A step 220 collectively shows individual measuring steps for the second analysis item, which are operated similarly to the measuring steps for the first analysis item. At this time, although the agent used is changed to another one necessary for the second analysis item, the samples to be sampled are the same as those in the case of the first analysis item, as will seen from the Table 2.

In a like manner, subsequent steps 221 - 223 will be executed successively. When all the analysis items for all the samples have been measured completely, the analyzing apparatus 1 puts its analyzing operation to end (step 224) and is brought into a stand-by state.

According to the present invention, as described above, it is possible to proceed proper analyzing operation dependent on the number of samples and the number of analysis items. It is also possible to provide a samll-sized automatic analyzing apparatus with a simple mechanism.

## Claims

1. An apparatus for chemically analyzing a liquid sample comprising a pipetting probe (9) for transferring a sample from a sample container (54) and a reagent from a reagent container (54) to a reaction container (58), and means (50) for optically measuring a reaction solution produced through a reaction between the sample and the reagent, characterised by

a common space (8) which is provided along a movement path of said pipetting probe (9) and in which both,sample containers (54) and reagent containers (54) can be set,

input means (14) for allocating positions (8A, 8B) in said common space (8) at which said sample containers (54) and said reagent containers (54) are set individually, and

control means (3) for filing the respective positions allocated for samples and reagents in said common space (8) based on the allocating information from said input means (14), and controlling the operation of said pipetting probe (9) based on the filed information.

2. The apparatus of claim 1, wherein said common space (8) is formed such that a plurality of containers (54) are stationarily held therein.

3. The apparatus of claim 1 or 2, further comprising display means (13) for displaying respective positions allocated for said samples and said reagents.

4. The apparatus of any one of claims 1 to 3, wherein said pipetting probe (9) is attached to an arm (10) capable of turning about a rotational shaft (52).

5. The apparatus of claim 4, wherein said common space (8) is extended in the arcuate form following a circumference along which said pipetting probe (9) is movable, and has a plurality of places for receiving containers of the same shape.

6. The apparatus of claim 5, wherein a partition (32) for positioning said containers (54) to be loaded is formed between one container receiving place and another container receiving place adjacent to each other.

7. The apparatus of any one of claims 4 to 6, wherein the reaction container (58), a probe cleaning tank (62), a reaction solution inlet for a cuvette (4) and a waste receiving inlet (6) are arranged along a circumference along which said pipetting probe (9) is movable.

8. The apparatus of claim 7, wherein said probe cleaning tank (62) comprises a bottom-equipped inner tube (22) and a liquid draining outer tube (68), these tubes being arranged such that the cleaning liquid overflown from said bottom-equipped inner tube (22) flows into said liquid draining outer tube (68).

9. The apparatus of any one of claims 1 to 8, wherein the maximum total number of said sample and reagent containers (54) capable of being set in said common space (8) is constant.

10. The apparatus of claim 9, wherein a plurality of holders (54) having the same shape are arrayed in said common space (8) at equal intervals.

11. The apparatus of claim 10, wherein said plurality of holders (54) double as containers capable of containing liquids.

12. The apparatus of claim 10 or 11, wherein said plurality of holders (54) are individually attached to said common space (8) in a detachable manner.

13. The apparatus of any one of claims 10 to 12, wherein each of said holders (54) has an opening (56), and a cup (42, 43) having a smaller volume than said holder (54) is placed in said opening (56).

14. A method for chemically analyzing a liquid sample comprising supplying a sample from a sample container (54) and a reagent from a reagent container (54) to a reaction container (58) by a pipetting probe (9), and optically measuring a reaction solution produced through a reaction between the sample and the reagent, characterised by

arranging sample containers (54) and reagent containers (54) in a common space (8) where both of said sample and reagent containers can be set,

filing information identifying those set positions in said common space (8), at which said sample and reagent containers (54) are arranged individually, to control means (3) through an inputting operation from input means (14), and

pipetting each sample and each reagent by said pipetting probe (9) based on the information filed in said control means (3).

15. The method of claim 14, wherein a plurality of bottles (54) doubling as holders of the same shape are arranged in said common space (8), and a cup (42, 43) of small volume which contains the sample or the reagent can be placed on said bottle (54).

16. The method of claim 14 or 15, further comprising the steps of

supplying the sample and the reagent to said reaction container (58) by the same pipetting probe (9), and

transferring the reaction solution in said reaction container (58) to a cuvette (4) of a photometer (50) by said pipetting probe (9).

17. The method of any one of claims 14 to 16, further comprising the steps of transferring the reaction solution remaining in said reaction container (58) to a waste receiving section (6) by said pipetting probe (9) for draining,

then discharging a cleaning liquid into said reaction container (58) through said pipetting probe (9), and transferring the cleaning liquid discharged into said reaction container (58) to said waste receiving section (6) by said pipetting probe (9).

18. The method of any one of claims 14 to 17, further comprising the steps of

taking those samples, which require analysis of the same component, out of said sample containers (54) successively and supplying the taken-out samples to a plurality of reaction containers (58), respectively, by said pipetting probe (9),

then selectively taking a reagent corresponding to said component out of said reagent containers (54) and adding the taken-out reagent to said plurality of reaction containers (58) by said pipetting probe (9), and sucking a solution of the sample and reagent in each re action container (58) into said pipetting probe (9), and then returning the sucked solution again to the original reaction container (58) for mixing.

FIG. 1

EP 0 411 620 A2

# F I G. 2

# FIG. 3

# FIG. 4

**F I G. 5**

**F I G. 6**

**F I G. 7**

# FIG. 8

# FIG. 9

| Label | |
|---|---|
| SUPPLIED WATER LEVEL DETECTION | 103 |
| WASTE LEVEL DETECTION | 104 |
| NOZZLE DESCENT CONTACT DETECTION | 105 |
| NOZZLE DIPPED LEVEL DETECTION | 106 |
| PIPETTING MECHANISM UPPER LIMIT DETECTION | 107 |
| PIPETTING MECHANISM ORIGIN DETECTION | 108 |
| $\mu\ell$ SYRINGE UPPER LIMIT DETECTION | 109 |
| $m\ell$ SYRINGE UPPER LIMIT DETECTION 1 | 110 |
| $m\ell$ SYRINGE UPPER LIMIT DETECTION 2 | 111 |

FLOPPY DISK — 70
F.D. INT.F — 102
CONTROL PANEL — 101
PRINTER — 15
CONTROL PANEL INT.F — 122
PRINTER INT.F — 118
DI INTERFACE — 112
50
114a
115a
$\lambda$1 MPX. — 114a
$\lambda$1 ADC
$\lambda$2 MPX.
$\lambda$2 ADC — 115b
ADC INT.F — 116
CPU — 121
DO INTERFACE — 117
36
113
114b
115a

PM CONT. — 118d
PM DRV. — 119d
PM — 19d
PM CONT. — 118e
PM DRV. — 119e
PM — 19e
PM CONT. — 118a
PM DRV. — 119a
PM — 19a
PM CONT. — 118b
PM DRV. — 119b
PM — 19b
PM CONT. — 118c
PM DRV. — 119c
PM — 19c
SOLENOID VALVE DRIVER — 120a
SV$_1$ — 18a
SOLENOID VALVE DRIVER — 120b
SV$_2$ — 18b

EP 0 411 620 A2

# FIG. 10A

START OF ANALYSIS — 201

INJECTION OF SAMPLE — 202

CLEANING OF NOZZLE — 203

YES ← SAMPLING CONTINUED ? — 204

NO

INJECTION OF FIRST REAGENT — 205

NO ← ADDITION OF FIRST AGENT COMPLETED ? — 206

YES

CLEANING OF NOZZLE — 207

INJECTION OF SECOND REAGENT — 208

MIXING — 209

CLEANING OF NOZZLE — 210

NO ← ADDITION OF SECOND REAGENT COMPLETED ? — 211

TRANSFER OF REACTION SOLUTION TO CUVETTE — 212

MEASUREMENT OF ABSORBANCE — 213

CALCULATION AND OUTPUTTING OF RESLUT — 214

X — · — · — · — · — · — X

# FIG. 10B

X                                                    X

CLEANING OF
REACTION CONTAINER          215

CLEANING OF CUVETTE          216

NO ← MEASUREMENT OF
REACTION SOLUTION ?          217

YES

YES ← NEXT SAMPLE REMAINING
?          218

NO

219 ← NEXT ANALYSIS ITEM
REMAINING ?          YES

NO

ANALYSIS ITEM 2          220

221 ← NEXT ANALYSIS ITEM
REMAINING ?          NO

YES          222

ANALYSIS ITEM N

YES ← NEXT ANALYSIS ITEM
REMAINING ?

223          NO

END OF ANALYSIS          224

# FIG. 10

| FIG. 10A |
|----------|
| FIG. 10B |